# EUROPÄISCHE PATENTSCHRIFT

(11) **EP 1 708 058 B1**
(45) Veröffentlichungstag und Bekanntmachung des Hinweises auf die Patenterteilung: **20.08.2008**
(21) Anmeldenummer: 05007161.2
(22) Anmeldetag: 01.04.2005
(51) Int. Cl.: G05B 19/404

(54) **Verfahren zur Kompensation von Überschwingern einer Hauptachse**
Method for compensating the oscillations of a main axis
Procédé pour compenser les suroscillations d'un axe principal

(43) Veröffentlichungstag der Anmeldung: 04.10.2006
(73) Patentinhaber: Trumpf Laser- und Systemtechnik GmbH, 71254 Ditzingen (DE)
(72) Erfinder: Wadehn, Wolf, 71735 Nussdorf (DE)
(74) Vertreter: Kohler Schmid Möbus

(56) Entgegenhaltungen:
- EP-A- 0 594 699
- DE-A1- 19 630 694
- DE-A1- 19 851 781
- DE-C1- 10 156 781
- US-A- 5 109 148

## Beschreibung

Die Erfindung betrifft ein Verfahren zur Positionierung eines Werkzeugs einer Werkzeugmaschine in Bezug zu einem Werkstück und eine Werkzeugmaschine.

Bei Werkzeugmaschinen werden beispielsweise Werkzeughalter, die ein Werkzeug halten, oder Laserbearbeitungsköpfe über Antriebe und möglicherweise dazwischen geschaltete mechanische Komponenten, wie Getriebe oder Portale, an denen der Werkzeughalter befestigt sein kann, in eine bestimmte Achsrichtung bewegt. Abkürzend wird dies häufig mit Werkzeugachse oder nur als Achse bezeichnet. Alternativ oder zusätzlich ist es möglich, ein Werkstück über einen Antrieb in eine bestimmte Achsrichtung zu bewegen. Dies wird abkürzend häufig als Werkstückachse oder auch nur als Achse bezeichnet. Sind zwei Antriebe vorhanden, die in dieselbe Achsrichtung wirken, so wird der eine Antrieb, der häufig eine geringere Dynamik aufweist, typischerweise als Hauptachse und der zweite Antrieb, der häufig eine höhere Dynamik aufweist, typischerweise als Zusatzachse bezeichnet. Da das Bearbeitungsergebnis der Relativbewegung zwischen Werkzeug und Werkstück entspricht, ist nicht entscheidend ob Werkzeug oder Werkstück bewegt wird.

Aufgrund der endlichen Steifigkeit der Antriebe und mechanischen Komponenten werden bei einer Änderung der Bewegung einer Achse Schwingungen in die Achse induziert. Diese Schwingungen führen zu einem unerwünschten Überschwingen des Werkzeugs, insbesondere des so genannten Tool Center Points (TCP), über eine Soll-Position und somit zu einem schlechten Bearbeitungsergebnis des Werkstücks. Ein Maß für diese Neigung zu Schwingungen findet sich in der Höhe der mechanischen Eigenfrequenzen wieder. Bei einem System mit hohen Massen/niedrigen Steifigkeiten und daraus resultierenden niedrigen Eigenfrequenzen ergibt sich aus dieser Schwingungsproblematik das Problem, dass für ein ausreichendes Bearbeitungsergebnis die Verfahrgeschwindigkeit in Ecken reduziert wird.

Ein Konzept mit hochdynamischen Zusatzachsen könnte diese unerwünschten Effekte stark reduzieren. Charakteristisch für diese Zusatzachsen ist, dass sie geringe bewegte Massen aufweisen und somit die mechanische Eigenfrequenz der Zusatzachsen wesentlich höher als die der Hauptachsen ist. Die Bewegung des TCP wird bei diesem Konzept in eine Bewegungskomponente mit niedriger Dynamik und großen Bewegungen für die Hauptachse aufgeteilt, und in eine Bewegungskomponente mit hoher Dynamik und begrenzten Bewegungen für die Zusatzachse.

Die DE 101 56 781 C1 schlägt zur Umgehung des mechanischen Problems von durch hochdynamische Bewegungen erzeugten Trägheitskräften, die eine Maschinenmechanik zu Schwingungen anregen, vor Leichtbauelemente mit entsprechenden Schwingungen zuzulassen und die entsprechenden Schwingungen durch einen Zusatzantrieb mit kleiner Bewegungsamplitude im zu positionierenden Maschinenpunkt aktiv zu kompensieren. Die Schwingungen können dabei durch direkte Messungen der Position oder indirekt über eine Beschleunigungsmessung im zu positionierenden Maschinenpunkt erfasst werden.

Aus der US 5,109,148 ist es bekannt, bei einer Werkzeugmaschine die Bewegungen einer Hauptachse und einer Zusatzachse zu überlagern, wobei zur Ansteuerung der Zusatzachse ein Ist-Wert der Bewegung der Hauptachse ermittelt wird und daraus die Ansteuerung der Zusatzachse ermittelt wird.

Aus der DE 198 51 781 A1 ist es bekannt, einer Maschinenachse mit ungenügenden dynamischen Eigenschaften eine Hilfsachsbewegung zu überlagern, die parallel zu der Maschinenachse verläuft und die Abweichungen der Maschinenachse von der vorgegebenen Soll-Bewegung kompensiert wird.

Die DE 196 30 694 A1 offenbart ein Verfahren, das die Verlagerung an ihrer Wirkstelle zwischen Werkzeug und Werkstück unmittelbar bestimmende Störgrößen ermittelt. Aus den Störgrößen wird ein mathematisches Prozessmodel generiert, auf dessen Basis die nichtstatistischen Anteile der Störgrößen generiert werden. Auf der Basis dieses Prozessmodels wird eine voreilende Schätzung des zukünftigen Verhaltens der an der Wirkstelle auftretenden Störgröße vorgenommen und entsprechend diesem zukünftigen Störgrößenverhalten wird die Kompensation der Verlagerung gesteuert.

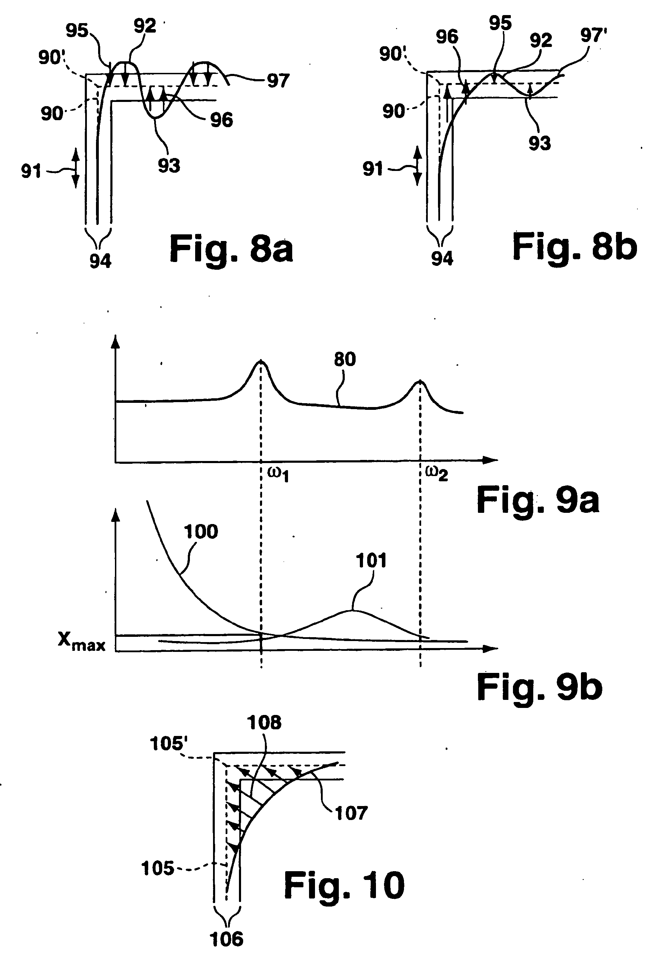

Fig. 9a zeigt die stark vereinfachte Amplitude 80 des Mechanikfrequenzgangs einer Haupt- und einer Zusatzachse einer Werkzeugmaschine. Bei einer niedrigen Frequenz im Bereich um ω₁ ergibt sich eine Überhöhung der Bewegung des TCP bezogen auf eine Anregung, welche aus der elastischen Verformung der Bauteile der Hauptachse resultiert. Aufgrund der geringeren Masse der Zusatzachse ergibt sich eine zweite Überhöhung der Bewegung des TCP aufgrund der Verformung der Zusatzachse erst bei einer wesentlich höheren Frequenz im Bereich um ω₂. Die Zusatzachse kann somit wesentlich höherdynamische Bewegungen ausführen, ohne eine Konturverzerrung aufgrund der mechanischen Verformung und damit verbundener Schwingungen aufzuweisen.

Fig. 9b zeigt das Amplitudenspektrum eines konventionellen Steuerungskonzepts mit einer hochdynamischen Zusatzachse. Die Bewegung der Hauptachse wird so modifiziert bzw. zeitlich gestreckt, dass der Frequenzbereich der Bewegung unterhalb der Kurve 100 liegt. Hierbei wird versucht, die Bewegung so zu modifizieren, dass die Zusatzachse den Restanteil der notwendigen Bewegung, um eine Sollposition zu erreichen, als Zusatzbewegung ausführt und somit die resultierende Bahn des TCP der Sollbahn möglichst nahe kommt. Das Spektrum der Bewegung der Zusatzachse darf aufgrund des hohen Massenunterschieds der Achsen entsprechend der Kurve 101 bis zur Frequenz ω₂ hohe Amplitudenanteile aufweisen. Der ursächliche Hauptanteil eines Überschwingens der Hauptachse über eine Sollposition entsteht aus dem Produkt der Anregungsamplitude der Hauptachse Xₘₐₓ bei der Frequenz ω₁ und der Höhe der Bewegungsüberhöhung des Mechanikfrequenzgangs bei der Frequenz ω₁ in Fig.9a. Da die Hauptachse kein Überschwingen aufweisen soll, ergibt sich hierdurch für die Hauptachse die Grenzkurve im Frequenzbereich 100.

Zur Verdeutlichung ist in der Fig. 10 die Bahnaufteilung auf Haupt- und Zusatzachsen mit einem konventionellen Steuerungssystem gezeigt, wobei die Bahnbewegung durch zwei Hauptachsen in unterschiedliche Achsrichtungen und zumindest einer Zusatzachse, welche in Richtung einer Hauptachse wirkt, realisiert wird. Die Sollbahn 105 ist gestrichelt dargestellt. Ein zulässiger Toleranzbereich ist mit 106 bezeichnet.

Für eine nahezu konstante Bahngeschwindigkeit in der Ecke 105' sind sehr hohe Beschleunigungen der Achsen erforderlich, was in einem sehr hochfrequenten Anregungsspektrum des Achsverbundes, bestehend aus Haupt- und Zusatzachsen, resultiert.

Die Hauptachse führt die niederfrequenten Anteile der Bewegung aus, was zu einem hohen Verschleifradius der Bahn 107 der durch die Hauptachsen bewirkten Bewegung des TCPs führt. Die Zusatzachsen übernehmen die höherfrequenten Bewegungsanteile, was eine überlagerte Zusatzbewegung 108 des TCP erzeugt. Die resultierende Bahn des TCP liegt somit exakt auf der Sollbahn 105 und bleibt innerhalb des vorgegebenen Toleranzschlauchs 106.

Das steuerungstechnische Konzept für solche Achskombinationen basiert im Stand der Technik, beispielsweise der EP 0 594 699 B1, auf einer Aufteilung der Führungsgrößen in einen niederfrequenten Anteil der Bewegungen für die Hauptachsen mit großem Stellweg und einem höherfrequenten Anteil der Bewegungen für die Zusatzachsen.

Diese Art der Ansteuerung birgt folgende Probleme. Die Zusatzachse muss relativ große Stellwege aufweisen, da die Bandbegrenzung eine starke Verschleifung der Kontur zur Folge hat und somit Ausgleichsbewegungen der Zusatzachsen in einer Größenordnung von mehreren Millimetern erforderlich sind. Die Bahnaufteilung erfordert eine tief greifende Änderung des gesamten Steuerungskonzeptes. Es ist derzeit kein kommerzielles Steuerungssystem bekannt, welches die auftretenden Probleme (Echtzeitfähigkeit, Bahntreue) zufrieden stellend gelöst hat.

Aufgabe der vorliegenden Erfindung ist es, in dieser Hinsicht Abhilfe zu schaffen.

Diese Aufgabe wird erfindungsgemäß durch ein Verfahren mit den Merkmalen des Anspruchs 1 gelöst.

Hierdurch ist ein vereinfachtes Steuerungskonzept möglich. Es ist nicht notwendig, dass das unerwünschte und aufgrund der Eigenschwingungen der Hauptachse regelmäßig auftretende Überschwingen, beispielsweise eines Werkzeugs über eine Sollposition, bereits bei der Ansteuerung der Hauptachse berücksichtigt wird. Dadurch kann die Hauptachse mit größeren Beschleunigungen und Geschwindigkeiten verfahren werden. Insbesondere muss nicht wie üblich ein Schwingen der Hauptachse durch eine Frequenzweiche verhindert werden, sondern kann eine bewusst zugelassene Schwingung der Hauptachse gegenphasig über die Zusatzachse ausgeführt und somit kompensiert werden. Die Zusatzachse benötigt nur relativ geringe Bewegungsamplituden, da nur die aus den mechanischen Elastizitäten der Hauptachsenkomponenten resultierenden Abweichungen ausgeführt werden. Die Ansteuerung der Zusatzachse ist auf einem von der Hauptachsensteuerung unabhängigen Steuerungsrechner durchführbar. Soll- und Ist-Größen für (Relativ-)Bewegungen können dabei die Bewegungen beschreibende Größen, wie Geschwindigkeit, Beschleunigung, Strecke, Anfangs- und/oder Endposition, sein.

Die Abweichung der durch den ersten Antrieb bewirkten Ist-Relativbewegung von der Soll-Gesamtrelativbewegung wird anhand eines Modells abgeschätzt oder berechnet. Dadurch kann eine schnellere Kompensation des Überschwingens erzielt werden. Insbesondere sind keine Messeinrichtungen notwendig, um Beschleunigungswerte der Haupt-und/oder der Zusatzachse zu erfassen. Es kann ausreichend sein, die Zusatzachse ausschließlich zu steuern. Eine Regelung der Zusatzachse kann sich erübrigen. Alternativ ist es jedoch auch möglich, die Abweichung zu messen. Die Kompensation des Überschwingverhaltens der Hauptachse durch die Zusatzachse kann daher aufgrund einer Messung des Überschwingens, aufgrund einer Abschätzung des Überschwingens mittels eines Modells oder aufgrund einer Kombination von Messung und Abschätzung erfolgen.

Anstatt die Abweichung der Ist-Relativbewegung von der Soll-Gesamtrelativbewegung abzuschätzen, kann es einfacher sein, die durch den ersten Antrieb bewirkte Bewegung in Achsrichtung abzuschätzen oder zu berechnen und daraus die Abweichung der Ist-Relativbewegung von der Soll-Gesamtrelativbewegung zu ermitteln.

Wenn zumindest eine die Relativbewegung beschreibende Größe erfasst wird, kann diese bei der Bestimmung der Abweichung der Ist-Relativbewegung von der Soll-Gesamtrelativbewegung berücksichtigt werden.

Besonders vorteilhaft ist es, wenn anhand der zumindest einen die Relativbewegung beschreibenden Größe ein Modell zur Berechnung oder Abschätzung der Ist-Relativbewegung oder der durch den ersten Antrieb bewirkten Bewegung angepasst wird. Insbesondere kann im Antriebsstrang nach der zu kompensierenden Strukturelastizität eine Größe zur Beschreibung der Ist-Bewegung des TCP gemessen werden. Aufgrund dieser Größe kann das Modell zur Berechnung oder Abschätzung der Ist-Relativbewegung entsprechend dem genauen Ist-Zustand der Regelstrecke angepasst werden. Dadurch wird die Abschätzung der Abweichung genauer. Insbesondere kann dadurch das Überschwingverhalten der Hauptachse ermittelt werden und kann das mathematische Modell online, d.h. in Echtzeit, adaptiert werden. Wenn beispielsweise beim Schweißen ein Draht abwickelt, so kann sich aufgrund einer Gewichtsveränderung das Überschwingverhalten ändern. Das Überschwingen der Hauptachse kann demnach nur dauernd richtig vorausbestimmt werden, wenn auch das mathematische Modell entsprechend nachgeführt wird.

Bei einer Verfahrensvariante kann vorgesehen sein, dass aus der vorgegebenen Soll-Gesamtrelativbewegung eine von dieser abweichende Soll-Relativbewegung ermittelt wird und der erste Antrieb zur Durchführung dieser Soll-Relativbewegung mit einer angepassten Sollgröße angesteuert wird. Die erfindungsgemäße Lösung kann somit mit einer Ansteuerung einer Hauptachse nach dem Stand der Technik kombiniert werden. Dies bedeutet, dass die von dem ersten Antrieb durchgeführte Bewegung (beispielsweise eine Eckfahrt) verschliffen wird. Dadurch kann das Überschwingen der Hauptachse über die Sollposition verringert werden, so dass nur noch ein geringeres erfindungsgemäßes gegenphasiges Kompensieren durch die Zusatzachse notwendig ist.

Vorrichtungsmäßig betrifft die Erfindung eine Werkzeugmaschine mit den Merkmalen des Anspruchs 6.

Mit einer derartigen Maschine ist es möglich, ein Überschwingen der Hauptachse zu bestimmen, insbesondere abzuschätzen, und das Überschwingen durch eine leichtere Zusatzachse gegenphasig zu kompensieren. Die Zusatzachse kann dabei insbesondere ein kleiner, leichter, hochdynamischer Aktor sein. Es ist beispielsweise denkbar, dass ein Piezo-Aktor verwendet wird. Auch sind hydraulische oder pneumatische Aktoren denkbar, bei denen durch eine Druckänderung eine lineare Bewegung bewirkt wird. Derartige Aktoren können durch einfache Anschlüsse mit wenigen Leitungen realisiert werden. Die Zusatzachse kann somit unter Umständen als rein gesteuerte Achse ausgeführt werden. Es ist dann kein Regelkreis notwendig. Dadurch entfallen Messeinrichtungen für die Zusatzachse. Sie können dadurch mit geringem Aufwand und zu geringen Kosten realisiert werden. Vorzugsweise sind die Hauptachse und die Zusatzachse mechanisch in Reihe geschaltet.

Besonders bevorzugt ist es, wenn den Mitteln zum Ermitteln der Abweichung die Sollgröße bzw. ein Steuersignal für die Soll-Gesamtrelativbewegung zugeführt ist, die daraus eine durch den ersten Antrieb verursachte Bewegung bzw. eine diese beschreibende Größe abschätzen oder berechnen. Aufgrund des Ansteuersignals ist den Mitteln zum Ermitteln der Abweichung bekannt, welche Bewegung die Hauptachse als nächstes durchführen wird. Dadurch kann eine Kompensation des Überschwingens ermittelt werden. Eine Zeitverzögerung vor der Ausgabe der Sollwerte auf die Hauptachse oder auf die Zusatzachse ist denkbar.

Bei einer vorteilhaften Ausgestaltung der Erfindung ist eine erste Erfassungseinrichtung zur Erfassung der Ist-Gesamtrelativbewegung oder zumindest einer diese beschreibende Größe vorgesehen, die mit den Mitteln zum Ermitteln der Abweichung in Verbindung stehen kann. Somit kann ein in den Mitteln zur Ermittlung der Abweichung abgelegtes mathematisches Modell angepasst werden. Außerdem kann eine Regelung der Zusatzachse erfolgen.

Vorzugsweise ist eine zweite Erfassungseinrichtung zur Erfassung der durch den ersten Antrieb verursachten Bewegung, beispielsweise einer Schwingung, oder einer diese beschreibende Größe vorgesehen. Dadurch wird eine Rückkopplung realisiert, so dass eine Regelung der Hauptachse und/oder Anpassung des mathematischen Modells ermöglicht wird.

In einer Regeleinrichtung können somit beispielsweise folgende Regelkonzepte hinterlegt sein:
• Direktes negatives Aufschalten der gemessenen Bahnabweichung;
• Unterstützung der im mathematischen Modell berechneten Bahnabweichung durch die Berücksichtigung zusätzlicher Messwerte;
• Adaption des mathematischen Modells an das tatsächliche Maschinenverhalten.

Weiterhin ist eine Kombination von zwei oder mehreren der genannten Regelkonzepte denkbar.

Bevorzugte Ausführungsbeispiele der Erfindung sind in der Zeichnung schematisch dargestellt und werden nachfolgend mit Bezug zu den Figuren der Zeichnung näher erläutert. Es zeigt:
- Fig. 1: eine erste Werkzeugmaschine mit entlang zweier Achsrichtungen bewegbarem Werkstück;
- Fig. 2: eine Werkzeugmaschine mit einem in zwei Achsrichtungen bewegbaren Werkzeug;
- Fig. 3: eine Werkzeugmaschine mit fünf Achsrichtungen;
- Fig. 4: eine Werkzeugmaschine mit sechs Achsrichtungen;
- Fig. 5: eine Werkzeugmaschine mit vier Achsrichtungen und bewegbarem Werkstück;
- Fig. 6: ein Blockschaltbild zur Veranschaulichung des Steuerungskonzepts für eine Hauptachse und Zusatzachse,
- Fig. 7a: einen Frequenzgang einer Maschinenachse mit Zusatzachse;
- Fig. 7b: ein Anregungsspektrum des erfindungsgemäßen Steuerungskonzepts;
- Fig. 8a: das Verhalten der Haupt- und Zusatzachsen bei einer Eckenfahrt mit dem erfindungsgemäßen Steuerungskonzept;
- Fig. 8b: das Verhalten der Haupt- und Zusatzachsen bei einer Eckenfahrt mit adaptiertem erfindungsgemäßem Steuerungskonzept;
- Fig. 9a: einen Frequenzgang einer Maschinenachse mit Zusatzachse wie in der Fig. 7a;
- Fig. 9b: ein Anregungsspektrum eines Steuerungskonzepts mit konventioneller Bahnaufteilung;
- Fig. 10: das Verhalten der Haupt- und Zusatzachsen bei einer Eckenfahrt mit einem Steuerungskonzept gemäß dem Stand der Technik.

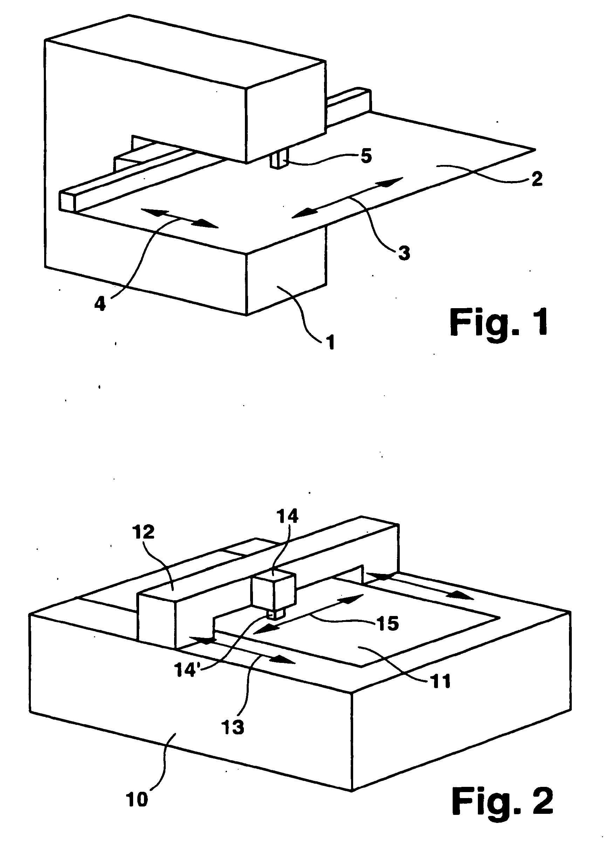

In der Fig. 1 ist eine Werkzeugmaschine 1 dargestellt, bei der ein Werkstück 2 entlang der Achsrichtungen 3, 4 bewegbar ist. Ein Werkzeughalter 5, der ein nicht dargestelltes Werkzeug aufnehmen kann, ist ebenfalls in Achsrichtung 4 bewegbar. Antriebe für das Werkstück, die in die Achsrichtungen 3, 4 wirken, können als Werkstückachsen bezeichnet werden. Der Antrieb des Werkzeughalters 5, der in Achsrichtung 4 wirkt, kann als Maschinenachse bezeichnet werden.

In der Fig. 2 ist eine weitere Werkzeugmaschine 10 dargestellt, bei der das Werkstück 11 ortsfest angeordnet ist. Ein Portal 12 ist entlang der Achsrichtung 13 bewegbar. An dem Portal 12 ist eine Einrichtung 14 angeordnet, an der wiederum ein Werkzeughalter 14' angeordnet ist, der ein Werkzeug halten kann. Die Einrichtung 14 (und damit das Werkzeug) ist in Achsrichtung 15 bewegbar. Der Werkzeughalter 14' ist bezüglich der Einrichtung 14 in Achsrichtung 13 beweglich. Aus der Fig. 2 ist ersichtlich, dass die Einrichtung 14 eine geringere Masse aufweist als das Portal 12. Deshalb können Bewegungen in Achsrichtung 15 schneller durchgeführt werden als Bewegungen des Portals in Achsrichtung 13. Hochdynamische Bewegungen in Achsrichtung 13 können jedoch durch den Werkzeughalter 14' ausgeführt werden.

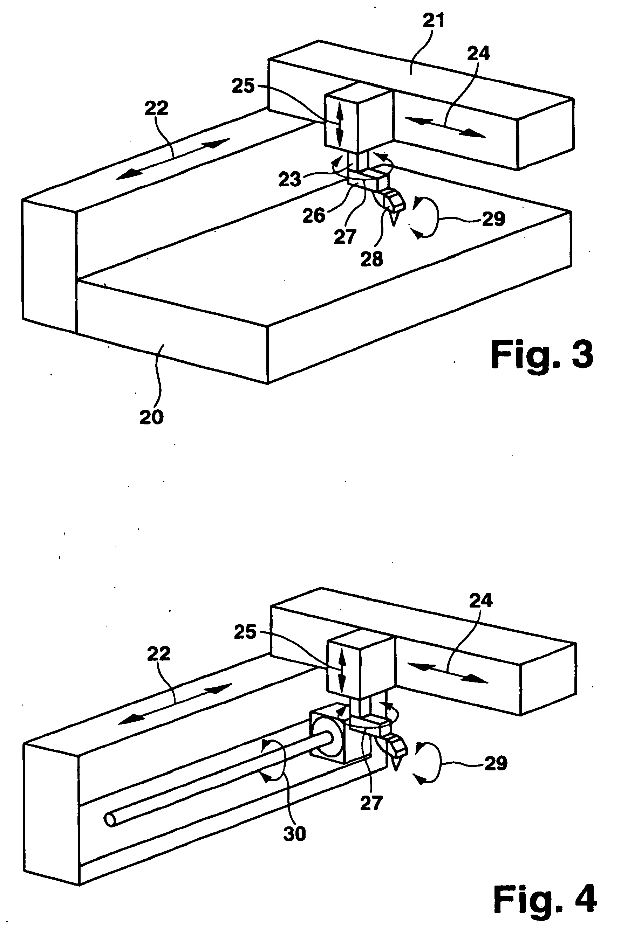

In der Fig. 3 ist eine Werkzeugmaschine 20 dargestellt, bei der ein Arm 21 entlang der Achsrichtung 22 bewegbar ist. Entlang dem Arm 21 ist eine Einrichtung 23 in Achsrichtung 24 bewegbar. Die Einrichtung 23 ist zusätzlich in Achsrichtung 25 bewegbar. Durch die Achsrichtungen 22, 24, 25 werden die X-, Y-, Z-Richtung eines kartesischen Koordinatensystems festgelegt. Ein Ausleger 26 ist in Achsrichtung 27 rotierbar. An dem Ausleger 26 ist ein Laserschneidkopf 28 angeordnet, der wiederum in Achsrichtung 29 rotierbar ist.

Als Zusatzachse kommen bei allen Maschinen der Figuren 1-5 alle Achsen in Frage, welche eine Relativbewegung zwischen TCP und Werkstück in Richtung einer Hauptachse erlauben und hierbei eine höhere Dynamik als die Hauptachsen aufweisen. Vorzugsweise sind dies Werkzeugachsen mit geringem Gewicht in der Nähe des TCP oder Werkstückachsen mit geringem Gewicht.

Eine beispielhafte Ausführungsform lässt sich durch eine Längenänderung des Auslegers 27 realisieren, oder einer Orientierungsänderung des Kopfes 28 um Achse 29, was zu einer Translation des TCP führt. Bei kleinen Winkeln ist der Orientierungsfehler am Werkstück vernachlässigbar.

Die Darstellung der Fig. 4 ähnelt der der Fig. 3, indem dieselben Achsrichtungen 22, 24, 25, 27, 29 vorgesehen sind. Zusätzlich ist eine Achsrichtung 30 vorgesehen, um die ein Werkstück gedreht werden kann.

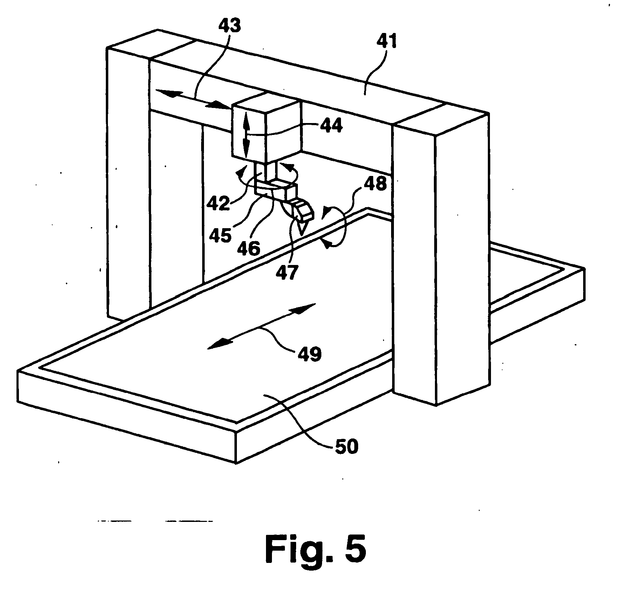

Eine weitere Ausgestaltung einer Werkzeugmaschine ist in der Fig. 5 dargestellt. An einem Portal 41 ist eine Einrichtung 42 in Achsrichtung 43 bewegbar. Die Einrichtung 42 ist wiederum in Achsrichtung 44 höhenverstellbar. Der Ausleger 45 ist in Achsrichtung 46 rotierbar und der Laserschneidkopf 47 ist in Achsrichtung 48 rotierbar. In die Achsrichtungen 43, 44, 46, 48 wirkende Antriebe können als Maschinenachsen bezeichnet werden, während ein in Achsrichtung 49 wirkender Antrieb als Werkstückachse bezeichnet werden kann, da entlang dieser Achse das Werkstück 50 bewegbar ist. Dadurch wird beispielsweise eine Hauptachse realisiert. Bei einer Werkzeugmaschine nach Art der Erfindung muss bezüglich einer Achsrichtung zumindest eine zweite Verstellmöglichkeit bestehen. In der Fig. 5 könnte dies dadurch realisiert werden, dass das Portal 41 ebenfalls in Achsrichtung 49 bewegbar ist.

Es ist hervorzuheben, dass die erfindungsgemäße Lösung an keine spezielle Anordnung der Werkzeug- oder Werkstückachsen gebunden ist.

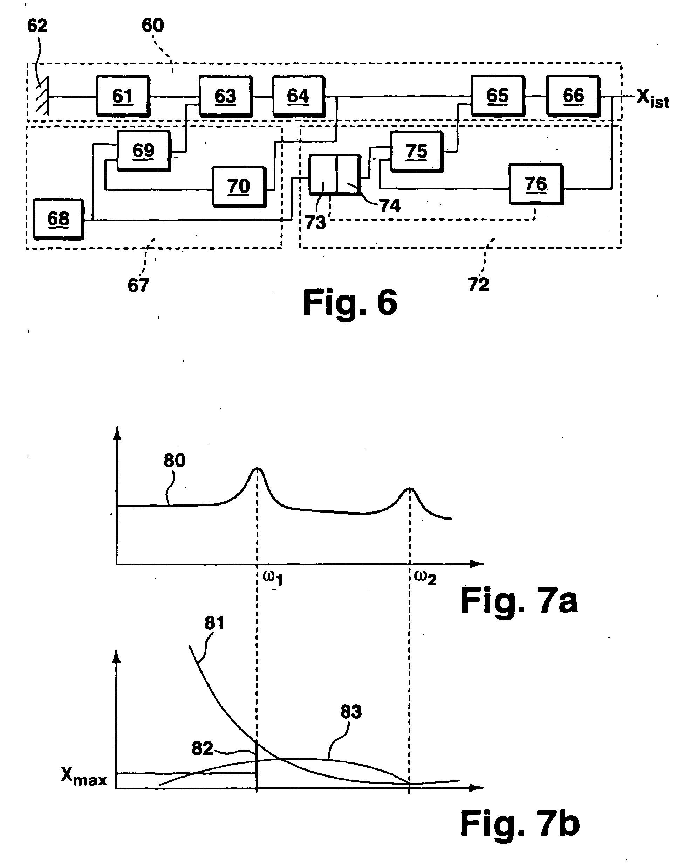

Fig.6 zeigt eine vereinfachte exemplarische Realisierungsform der Reglerstruktur, welche den Grundgedanken des erfindungsgemäßen Steuerungskonzeptes umsetzen kann. Die mechanischen Komponenten sind im Block 60 zusammengefasst, wobei der Block 61 die Mechanik zwischen einer Basis 62 und einem ersten Antrieb 63 darstellt. Die schwingungsfähigen Komponenten, die dem ersten Antrieb 63 nachgeordnet sind, beispielsweise ein Getriebe für eine Einrichtung, an der ein Werkzeughalter angeordnet ist, sind in dem Block 64 zusammengefasst. Die Blöcke 63, 64 können somit als Hauptachse betrachtet werden. Der Antrieb der Zusatzachse ist durch den Block 65 repräsentiert, wobei der zweite Antrieb 65 beispielsweise den Werkzeughalter relativ zur durch den ersten Antrieb 63 angetriebenen Einrichtung des Blocks 64 antreiben kann. Die schwingungsfähigen Komponenten der Zusatzachse, also beispielsweise ein Getriebe, der Werkzeughalter und das Werkzeug, sind mit 66 bezeichnet. Der Ausgang des Blocks 66 gibt eine Ist-Größe, z.B. die Beschleunigung oder die Position Xᵢₛₜ, beispielsweise eines TCPs, an.

Der Block 67 repräsentiert eine erste konventionelle Steuerungskomponente für die Hauptachse. Durch den Block 68, der als Steuereinheit ausgebildet sein kann, wird eine Sollgröße für die Gesamt-Relativbewegung von Werkzeug bzw. TCP und Werkstück vorgegeben (im Ausführungsbeispiel wird nur das Werkzeug in Achsrichtung bewegt, das Werkstück ist ortsfest angeordnet). Diese Sollgröße wird einer Lageregelung 69 zugeführt, die den ersten Antrieb 63 ansteuert, um die vorgegebene Soll-Gesamtrelativbewegung durchzuführen. Der Lageregelung 69 ist weiterhin eine die durch den ersten Antrieb 63 verursachte Bewegung beschreibende Ist-Größe zugeführt. Diese Größe wird durch eine Messeinrichtung 70 erfasst. Es wird also beispielsweise die Position oder die Beschleunigung der oben genannten Einrichtung des Blocks 64 erfasst. Durch den Vergleich dieser Größe und der Sollgröße für die Gesamt-Relativbewegung kann daher eine Ansteuergröße für den ersten Antrieb 63 ermittelt werden und eine Regelung der durch den ersten Antrieb 63 verursachten Bewegung erfolgen.

Die Steuerungskomponente für die Zusatzachse ist im Block 72 zusammengefasst. In Mitteln 73 zum Ermitteln einer Abweichung der durch den ersten Antrieb bewirkten Ist-Relativbewegung von der Soll-Gesamtrelativbewegung ist ein mathematisches Modell der (Gesamt-) Regelstrecke, also des Blocks 60, hinterlegt. Die im Block 68 vorgegebene Sollgröße für die Gesamtrelativbewegung wird den Mitteln 73 zugeführt, wo anhand des Modells ermittelt wird, welche Abweichung zu erwarten ist. Beispielsweise wird ermittelt, um welche Distanz der TCP über eine Sollposition aufgrund der schwingungsfähigen mechanischen Komponenten der Hauptachse bei einer Eckenfahrt und der damit einhergehenden schnellen Sollgrößenänderung, hinausfährt. Die berechneten Anteile der ungewollten Auslenkung des TCPs werden verwendet, um in Mitteln 74 eine Sollgröße für eine Kompensationsbewegung der Zusatzachse zu bestimmen. Diese Kompensationssollgröße wird einer Lageregelung 75 der Zusatzachse zugeführt, wo eine Ansteuergröße für den zweiten Antrieb 65 ermittelt wird. Da die berechnete Amplitude im praktischen Anwendungsfall aufgrund von Phasendifferenzen zur realen Regelstrecke meist schon innerhalb weniger Periodendauern nicht mehr mit der realen Schwingung übereinstimmt, wird die Ist-Gesamtrelativbewegung am Ausgang des Blocks 60 in einer Messeinrichtung 76 erfasst und der Lageregelung 75 zugeführt. Die Messeinrichtung 76 kann entsprechend der konstruktiven Ausprägung der Zusatzachse mehrere Sensoren umfassen:
- Bei einer in Lageregelung betriebenen Zusatzachse ist ein Messsystem (z.B. Lagemesssystem ) für den Antrieb 65 über den Regler 75 integriert, bei einer rein gesteuerten Achse entfällt dieses
- Es kann ein Messsystem zur Modifikation des Sollwerts für Regler 75 integriert sein, um die Phasengleichheit der Kompensationsbewegung entsprechend der Abweichung von der Sollgeometrie zu verbessern
- Es kann ein Sensor zur Nachführung des Modells in den Mitteln 73 integriert sein, so dass das abgelegte Modell anhand dieser Werte aktualisiert und der realen Situation angepasst werden kann.

Aus der Fig. 6 ist klar, dass die Hauptachse und die Zusatzachse mechanisch in Serie angeordnet sind.

In Fig. 7a ist der Frequenzgang 80 der Haupt- und Zusatzachse gezeigt, wobei die Eigenfrequenz der der Hauptachse zugeordneten schwingungsfähigen Komponenten bei ω₁ und die der schwingungsfähigen Komponenten der Zusatzachse bei ω₂ liegt. Zur anschaulichen Darstellung ist eine 2D-Bewegung dargestellt, die erfindungsgemäße Methode lässt sich aber auch auf den 3D-Fall übertragen.

In der Fig. 7b ist das Amplitudenspektrum des erfindungsgemäßen Steuerungskonzepts dargestellt. Man sieht am Amplitudenspektrum der Bewegung der Hauptachse 81, dass aufgrund einer hoch gewählten Bahngeschwindigkeit bei sehr geringem Verschleifen der Ecken einer Sollbahn eine deutliche Schwingungsanregung der Hauptachse auftritt, Bezugsziffer 82. Die Amplitude liegt daher bei ω₁ über dem Wert Xₘₐₓ, d.h. die Hauptachse wird derart angesteuert und beschleunigt, dass ein Überschwingen über die Sollposition bzw. die Sollbahn auftritt. Dies wird bewusst in Kauf genommen. Die Zusatzachse wird nun derart gesteuert, dass diese Überschwingamplituden der Hauptachse negativ mit der Zusatzachse ausgeführt werden, so dass die resultierende Bahn des TCP der Sollbahn entspricht. Die Hauptanteile des Spektrums der Bewegung der Zusatzachse 83 liegen im Bereich zwischen ω₁ und ω₂.

Fig.8a zeigt das erfindungsgemäße Konzept anhand einer Eckenfahrt des TCPs. Der TCP soll möglichst genau einer Sollkontur 90 folgen. Die in Achsrichtung 91 wirkende Hauptachse verfährt den TCP in Richtung auf den Eckpunkt 90' der Sollkontur 90. In Achsrichtung 91 stell der Eckpunkt 90' eine Sollposition für den TCP dar. Aufgrund der geringen Dynamik der Hauptachse schwingt der TCP jedoch stark über, was durch die Bezugszeichen 92, 93 angedeutet ist, und verlässt den Toleranzschlauch 94. Da bei ausreichend genauer Kenntnis der Regelstrecke dieses Überschwingen jedoch mathematisch vorausberechenbar ist, werden der Zusatzachse die ungewollten Bewegungsanteile als Sollwerte aufgeprägt, so dass die Zusatzachse kompensierende Bewegungen in Pfeilrichtungen 95, 96 ausführt und die resultierende Bahn wieder der Sollkontur 90 entspricht. Die durchgezogene Linie 97 entspricht also der Bewegung, die der TCP ausführen würde, wenn er nur durch die Hauptachsen bewegt würde.

In der Fig. 8b werden für entsprechende Sachverhalte dieselben Bezugsziffern wie in der Fig. 8a verwendet. Bei diesem Ausführungsbeispiel wird zusätzlich eine Sollgrößenanpassung für die Sollgröße der Gesamt-Relativbewegung vorgenommen, was auch mit Verschleifen bezeichnet wird. Dadurch wurde der TCP mit geringerer Geschwindigkeitsänderung in Achsrichtung 91 in Richtung auf den Eckpunkt 90' verfahren, so dass ein geringeres Überschwingen aufgetreten ist. Die durch die Bezugszeichen 92, 93 bezeichneten Überschwinger sind kleiner als in der Fig. 8a und liegen noch im Toleranzschlauch 94. Die durch die Linie 97' dargestellte Bewegung des TCP musste daher durch die Bewegungsanteile 95, 96 der Zusatzachse weniger stark kompensiert werden, um zur Sollbahn 90 zu gelangen. Fig. 8b zeigt, dass sich die erfindungsgemäße Lösung mit einer Ansteuerung einer Zusatzachse nach dem Stand der Technik kombinieren lässt.

## Patentansprüche

1. Verfahren zur Positionierung eines Werkzeugs einer Werkzeugmaschine (1, 10, 20) in Bezug zu einem Werkstück (2, 11, 50), umfassend die Verfahrensschritte:
a. Vorgabe einer Soll-Gesamtrelativbewegung des Werkzeugs und des Werkstücks (2, 11, 50) in einer Achsrichtung (3, 4, 13, 15, 24, 25, 27, 30, 44, 46, 48, 49, 91);
b. Ansteuerung wenigstens eines ersten Antriebs (63) zur Durchführung der Soll-Gesamtrelativbewegung in der Achsrichtung (3, 4, 13, 15, 24, 25, 27, 30, 44, 46, 48, 49, 91);
c. Ermitteln einer Abweichung der durch den ersten Antrieb (63) bewirkten Ist-Relativbewegung von der Soll-Gesamtrelativbewegung;
d. Ermitteln einer Kompensationsbewegung in Achsrichtung (3, 4, 13, 15, 24, 25, 27, 30, 44, 46, 48, 49, 91);
e. Ansteuerung wenigstens eines zweiten Antriebs (65) zur Durchführung der Kompensationsbewegung in der Achsrichtung (3, 4, 13, 15, 24, 25, 27, 30, 44, 46, 48, 49, 91),
**dadurch gekennzeichnet, dass**
die Abweichung der durch den ersten Antrieb (63) bewirkten Ist-Relativbewegung von der Soll-Gesamtrelativbewegung anhand eines Modells, abgeschätzt oder berechnet wird, indem dem Modell die Soll-Gesamtrelativbewegung zugeführt wird.

2. Verfahren nach Anspruch 1, **dadurch gekennzeichnet, dass** die durch den ersten Antrieb (63) bewirkte Bewegung in Achsrichtung (3, 4, 13, 15, 24, 25, 27, 30, 44, 46, 48, 49, 91) abgeschätzt oder berechnet wird und daraus die Abweichung der Ist-Relativbewegung von der Soll-Gesamtrelativbewegung ermittelt wird.

3. Verfahren nach einem der vorhergehenden Ansprüche, **dadurch gekennzeichnet, dass** zumindest eine die Relativbewegung beschreibende Größe erfasst wird.

4. Verfahren nach einem der vorhergehenden Ansprüche, **dadurch gekennzeichnet, dass** anhand der zumindest einen die Relativbewegung beschreibenden Größe ein Modell zur Berechnung oder Abschätzung der Ist-Relativbewegung oder der durch den ersten Antrieb (63) bewirkten Bewegung angepasst wird.

5. Verfahren nach einem der vorhergehenden Ansprüche, **dadurch gekennzeichnet, dass** aus der vorgegebenen Soll-Gesamtrelativbewegung eine von dieser abweichende Soll-Relativbewegung ermittelt wird und der erste Antrieb (63) zur Durchführung dieser Soll-Relativbewegung angesteuert wird.

6. Werkzeugmaschine (1, 10, 20), umfassend:
a. mindestens einen ersten Antrieb (63) zur Bewegung eines Werkzeugs oder eines Werkstücks (2, 11, 50) in einer Achsrichtung (3, 4, 13, 15, 24, 25, 27, 30, 44, 46, 48, 49, 91);
b. mindestens einen zweiten Antrieb (65) zur Bewegung eines Werkzeugs oder eines Werkstücks (2, 11, 50) in derselben Achsrichtung (3, 4, 13, 15, 24, 25, 27, 30, 44, 46, 48, 49, 91);
c. eine erste Steuerungskomponente (67) zur Ansteuerung des ersten Antriebs (63) gemäß einer Sollgröße für eine Soll-Gesamtrelativbewegung des Werkzeugs und des Werkstücks (2, 11, 50),
d. eine zweite Steuerungskomponente (72) zur Ansteuerung des zweiten Antriebs (65) gemäß einer Sollgröße für eine Kompensationsbewegung;
e. Mitteln (73) zum Ermitteln einer Abweichung der durch den ersten Antrieb (63) bewirkten Ist-Relativbewegung von der Soll-Gesamtrelativbewegung;
f. Mitteln (74) zum Ermitteln der Sollgröße für die Kompensationsbewegung in Abhängigkeit von der Abweichung,
**dadurch gekennzeichnet, dass**
den Mitteln (73) zum Ermitteln der Abweichung die Sollgröße für die Soll-Gesamtrelativbewegung zugeführt ist, die daraus anhand eines Modells eine durch den ersten Antrieb (63) verursachte Bewegung bzw. eine diese beschreibende Bewegungsgröße abschätzen oder berechnen.

7. Werkzeugmaschine nach Anspruch 6, **dadurch gekennzeichnet, dass** eine erste Erfassungseinrichtung zur Erfassung der Ist-Gesamtrelativbewegung bzw. einer diese beschreibende Größe vorgesehen ist.

8. Werkzeugmaschine nach Anspruch 7, **dadurch gekennzeichnet, dass** die erste Erfassungseinrichtung mit den Mitteln (73) zum Ermitteln der Abweichung in Verbindung steht.

9. Werkzeugmaschine nach einem der vorhergehenden Ansprüche 6 bis 8, **dadurch gekennzeichnet, dass** eine zweite Erfassungseinrichtung zur Erfassung der durch den ersten Antrieb (63) verursachten Bewegung bzw. einer diese beschreibende Größe vorgesehen ist.

## Claims

1. Method for positioning a tool of a machine tool (1, 10, 20) in relation to a workpiece (2, 11, 50), comprising the steps of:
a. specifying a desired total relative movement of the tool and the workpiece (2, 11, 50) in one axis direction (3, 4, 13, 15, 24, 25, 27, 30, 44, 46, 48, 49, 91);
b. actuating at least one first drive (63) for executing the desired total relative movement in the axis direction (3, 4, 13, 15, 24, 25, 27, 30, 44, 46, 48, 49, 91);
c. determining a deviation of the actual relative movement produced by the first drive (63) from the desired total relative movement;
d. determining a compensating movement in the axis direction (3, 4, 13, 15, 24, 25, 27, 30, 44, 46, 48, 49, 91);
e. actuating at least one second drive (65) for executing the compensating movement in the axis direction (3, 4, 13, 15, 24, 25, 27, 30, 44, 46, 48, 49, 91);
**characterised in that**
the deviation of the actual relative movement produced by the first drive (63) from the desired total relative movement is estimated or calculated on the basis of a model by supplying the desired total relative movement to the model.

2. Method according to claim 1, **characterised in that** the movement in the axis direction (3, 4, 13, 15, 24, 25, 27, 30, 44, 46, 48, 49, 91) produced by the first drive (63) is estimated or calculated and the deviation of the actual relative movement from the desired total relative movement is determined therefrom.

3. Method according to either of the preceding claims, **characterised in that** at least one quantity describing the relative movement is detected.

4. Method according to any one of the preceding claims, **characterised in that** a model for calculating or estimating the actual relative movement or the movement produced by the first drive (63) is adjusted on the basis of the at least one quantity describing the relative movement.

5. Method according to any one of the preceding claims, **characterised in that** a desired relative movement deviating from the specified total relative movement is determined from the specified total relative movement and the first drive (63) is actuated to execute that desired relative movement.

6. Machine tool (1, 10, 20), comprising:
a. at least one first drive (63) for moving a tool or a workpiece (2, 11, 50) in one axis direction (3, 4, 13, 15, 24, 25, 27, 30, 44, 46, 48, 49, 91);
b. at least one second drive (65) for moving a tool or a workpiece (2, 11, 50) in the same axis direction (3, 4, 13, 15, 24, 25, 27, 30, 44, 46, 48, 49, 91);
c. a first control component (67) for actuating the first drive (63) in accordance with a desired quantity for a desired total relative movement of the tool and the workpiece (2, 11, 50),
d. a second control component (72) for actuating the second drive (65) in accordance with a desired quantity for a compensating movement;
e. means (73) for determining a deviation of an actual relative movement produced by the first drive (63) from the desired total relative movement;
f. means (74) for determining the desired quantity for the compensating movement as a function of the deviation,
**characterised in that**
the desired quantity for the desired total relative movement is supplied to the means (73) for determining the deviation which estimate or calculate therefrom, on the basis of a model, a movement caused by the first drive (63) or a movement quantity describing that movement.

7. Machine tool according to claim 6, **characterised in that** a first detection device is provided for detecting the actual total relative movement or a quantity describing that movement.

8. Machine tool according to claim 7, **characterised in that** the first detection device is in communication with the means (73) for determining the deviation.

9. Machine tool according to any one of claims 6 to 8, **characterised in that** a second detection device is provided for detecting the movement caused by the first drive (63) or a quantity describing that movement.

## Revendications

1. Procédé pour positionner un outil d'une machine-outil (1, 10, 20) par rapport à une pièce usinée (2, 11, 50), comprenant les étapes suivantes :
a. prescription d'un mouvement relatif total de consigne de l'outil et de la pièce usinée (2, 11, 50) dans une direction axiale (3, 4, 13, 15, 24, 25, 27, 30, 44, 46, 48, 49, 91) ;
b. asservissement d'au moins un premier entraînement (63) pour effectuer le mouvement relatif total de consigne dans la direction axiale (3, 4, 13, 15, 24, 25, 27, 30, 44, 46, 48, 49, 91) ;
c. détermination d'un écart du mouvement relatif réel produit par le premier entraînement (63) par rapport au mouvement relatif total de consigne ;
d. détermination d'un mouvement de compensation dans la direction axiale (3, 4, 13, 15, 24, 25, 27, 30, 44, 46, 48, 49, 91) ;
e. asservissement d'au moins un deuxième entraînement (65) pour effectuer le mouvement de compensation dans la direction axiale (3, 4, 13, 15, 24, 25, 27, 30, 44,46,48,49,91),
**caractérisé en ce que** l'écart du mouvement relatif réel produit par le premier entraînement (63) par rapport au mouvement relatif total de consigne est estimé ou calculé à l'aide d'un modèle, par le fait que le mouvement relatif total de consigne est apporté au modèle.

2. Procédé selon la revendication 1, **caractérisé en ce que** le mouvement produit par le premier entraînement (63) dans la direction axiale (3, 4, 13, 15, 24, 25, 27, 30, 44, 46, 48, 49, 91) est estimé ou calculé, à partir de quoi l'on détermine l'écart du mouvement relatif réel par rapport au mouvement relatif total de consigne.

3. Procédé selon l'une des revendications précédentes, **caractérisé en ce qu'**on détecte au moins une grandeur décrivant le mouvement relatif.

4. Procédé selon l'une des revendications précédentes, **caractérisé en ce qu'**un modèle pour calculer ou estimer le mouvement relatif réel ou le mouvement produit par le premier entraînement (63) est adapté à l'aide de ladite au moins une grandeur décrivant le mouvement relatif.

5. Procédé selon l'une des revendications précédentes, **caractérisé en ce qu'**à partir du mouvement relatif total de consigne prescrit, on détermine un mouvement relatif de consigne différent de ce dernier, et on asservit le premier entraînement (63) pour effectuer ce mouvement relatif de consigne.

6. Machine-outil (1, 10, 20), comprenant :
a. au moins un premier entraînement (63) pour déplacer un outil ou une pièce usinée (2, 11, 50) dans une direction axiale (3, 4, 13, 15, 24, 25, 27, 30, 44, 46, 48, 49, 91) ;
b. au moins un deuxième entraînement (65) pour déplacer un outil ou une pièce usinée (2, 11, 50) dans la même direction axiale (3, 4, 13, 15, 24, 25, 27, 30, 44, 46,48,49,91);
c. un premier élément de commande (67) pour asservir le premier entraînement (63) d'après une grandeur de consigne pour un mouvement relatif total de consigne de l'outil et de la pièce usinée (2, 11, 50),
d. un deuxième élément de commande (72) pour asservir le deuxième entraînement (65) d'après une grandeur de consigne pour un mouvement de compensation ;
e. des moyens (73) pour déterminer un écart du mouvement relatif réel produit par le premier entraînement (63) par rapport au mouvement relatif total de consigne ;
f. des moyens (74) pour déterminer la grandeur de consigne pour le mouvement de compensation en fonction de l'écart,
**caractérisée en ce qu'**on apporte aux moyens (73) pour déterminer l'écart la grandeur de consigne pour le mouvement relatif total de consigne, à partir de quoi ces moyens estiment ou calculent, à l'aide d'un modèle, un mouvement produit par le premier entraînement (63) ou encore une grandeur de déplacement décrivant ce mouvement.

7. Machine-outil selon la revendication 6, **caractérisée en ce qu'**il est prévu un premier dispositif de détection pour détecter le mouvement relatif total réel ou encore une grandeur décrivant ce mouvement.

8. Machine-outil selon la revendication 7, **caractérisée en ce que** le premier dispositif de détection est relié aux moyens (73) pour déterminer l'écart.

9. Machine-outil selon l'une des revendications précédentes 6 à 8, **caractérisée en ce qu'**il est prévu un deuxième dispositif de détection pour détecter le mouvement produit par le premier entraînement (63) ou encore une grandeur décrivant ce mouvement.
